# EUROPEAN PATENT APPLICATION

(11) **EP 4 114 115 A1**
(43) Date of publication of application: **04.01.2023**
(21) Application number: 21868577.4
(22) Date of filing: 13.09.2021
(51) Int. Cl.: H04W 72/12

(54) **MESSAGE PROCESSING METHOD AND RELATED DEVICE**

(30) Priority: 15.09.2020 CN 202010966675
(71) Applicant: Huawei Technologies Co., Ltd., Shenzhen, Guangdong 518129, (CN)
(72) Inventor: MAO, Jianwei, Shenzhen, Guangdong 518129 (CN); PENG, Shuping, Shenzhen, Guangdong 518129 (CN)
(74) Representative: Epping - Hermann - Fischer
(86) International application number: PCT/CN2021/117912
(87) International publication number: WO 2022/057753

(57) **Abstract**

Embodiments of this application disclose a packet processing method and a related device, which may be applied to a mobile communications network. A first network device generates a first packet, where a packet header of the first packet carries application information; the first network device sends the first packet to a second network device; and the second network device provides a network service based on the application information in the packet header of the first packet. Because the second network device can identify the application information in the packet header of the first packet, and provide the corresponding network service based on the application information, differentiated network services are implemented, and a fine granularity of the network services is improved.

## Description

This application claims priority to Chinese Patent Application No. 202010966675.7, filed with the China National Intellectual Property Administration on September 15, 2020 and entitled "PACKET PROCESSING METHOD AND RELATED DEVICE", which is incorporated herein by reference in its entirety.

### TECHNICAL FIELD

Embodiments of this application relate to the communications field, and in particular, to a packet processing method and a related device.

### BACKGROUND

In a networking architecture of a fifth generation mobile communications technology 5G network, the 5G network requires parts such as a terminal device, a base station, a bearer network, a core network, and a data network. After application information for network access of a user is sent from the terminal device to the base station, the base station first encapsulates the application information on the terminal device into a general packet radio system tunneling protocol user plane (general packet radio system tunneling protocol user plane, GTP-U) tunnel to obtain a GTP-U packet, and then sends the GTP-U packet to a user plane function (user plane function, UPF) network element of the core network through the bearer network. After receiving the packet, the UPF network element decapsulates the GTP-U packet and sends the application information to an external data network of the 5G network, or the UPF network element decapsulates the GTP-U packet, encapsulates the application information of the user into a new GTP-U tunnel, and then relays the application information to another UPF network element.

In a conventional technology, no matter whether application information of a user is transmitted between a base station and a UPF network element, or is transmitted between UPF network elements, the application information is transmitted by using a GTP-U packet. However, a bearer network responsible for data transmission cannot obtain application information of an inner layer part of the GTP-U packet. Consequently, the bearer network cannot directly identify the application information, and cannot provide differentiated services for a large quantity of applications.

### SUMMARY

Embodiments of this application provide a packet processing method, a first network device, and a second network device, to resolve a problem that a second network device cannot provide diversified network services for a first network device based on application information.

A first aspect of the embodiments of this application provides a packet processing method, including: A first network device generates a first packet, where a packet header of the first packet carries application information; and the first network device sends the first packet to a second network device, where the first packet is used to indicate the second network device to provide a network service based on the application information.

In this embodiment of this application, the packet header of the first packet sent by the first network device to the second network device carries the application information, and the second network device can obtain the related application information from the packet header of the first packet, and provide differentiated network services based on the application information, so that a personalized network service is matched based on a transmission requirement, thereby improving a degree of refinement of a network transmission service.

With reference to the first aspect, in a first implementation of the first aspect of the embodiments of this application, the first packet includes a general packet radio system tunneling protocol user plane GTP-U packet, and the GTP-U packet is used in a mobile communications network.

In the mobile communications network, a packet sent by a base station to a UPF network element through a bearer network device may be a GTP-U packet, and the bearer network device may identify application information in a packet header of the GTP-U packet. This resolves a problem that a bearer network device cannot obtain application information of an inner layer data part (application layer data part) of a GTP-U packet.

With reference to the first aspect or the first implementation of the first aspect, in a second implementation of the first aspect of the embodiments of this application, before the first network device generates the first packet, the first network device receives a second packet, where an inner layer part of the second packet includes the application information, and the inner layer part of the packet refers to content of a packet data part that cannot be obtained through parsing by the second network device.

With reference to any one of the first aspect or the first implementation or the second implementation of the first aspect, in a third implementation of the first aspect of the embodiments of this application, the first network device obtains the application information from the inner layer part of the second packet, and the first network device updates the application information to the packet header, where an update manner may be copying, adding, or modifying.

Specifically, after encapsulating the packet header, the first network device updates the application information to the existing packet header, or adds a new packet header, or may update the application information to the packet header and then encapsulate the packet header to obtain the first packet. This is not specifically limited herein.

Specifically, the packet header of the first packet may be a GTP-U packet header encapsulated by the first network device, a UDP packet header and/or an IP packet header, and another packet header. A location of the application information may be a GTP-U extension packet header of the GTP-U packet header and/or an IP extension packet header of the IP packet header, where the IP extension packet header includes an IPv6 extension packet header and an IPv4 packet header.

In this embodiment of this application, the application information carried in the packet header of the first packet sent by the first network device can be obtained by updating the application information carried in the received second packet, and the second packet may come from user equipment or another network device. The first network device decapsulates and re-encapsulates the received second packet to obtain the first packet, and the first network device can identify the application information from the user equipment. This improves a capability of perceiving an application of the user equipment in network transmission.

With reference to any one of the first aspect or the first implementation to the third implementation of the first aspect, in a fourth implementation of the first aspect of the embodiments of this application, the packet header of the first packet includes a GTP-U extension packet header, an internet protocol version 4 IPv4 packet header, or an internet protocol version 6 IPv6 extension packet header.

In this embodiment of this application, a plurality of extension packet headers in the packet header of the first packet all can carry the application information. This improves applicability and feasibility of the solution.

In this embodiment of this application, if the packet header of the first packet is an IPv4 packet header or an IPv6 extension packet header, the following technical problem may be further resolved: When a parameter value of a path maximum transmission unit (path maximum transmission unit, Path MTU) of a transmission path between the first network device and a target network device to which the first packet is to be transmitted is small, for the first packet, a data packet needs to be fragmented for transmission, and the IPv4 packet header or the IPv6 extension packet header can avoid a case in which after the data packet is fragmented, only the first fragment carries the application information, thereby avoiding a case in which the second network device can provide the network service based on only the application information in the first fragment. This improves applicability of the solution in this embodiment of this application to a specific application scenario.

In this embodiment of this application, if the packet header of the first packet is an IPv4 packet header or an IPv6 extension packet header, when the first network device performs encryption, by using an internet protocol security (internet protocol security, IPsec) technology, with the target network device to which the first packet is to be transmitted, the IPv4 packet header or the IPv6 extension packet header can prevent, after the application information is encrypted, the second network device from failing to identify the application information carried in the packet header of the first packet. This improves applicability of the solution in this embodiment of this application to a specific application scenario.

With reference to the fourth implementation of the first aspect, in a fifth implementation of the first aspect of the embodiments of this application, the GTP-U extension packet header includes an extension header length field, a next extension header type field, and an application information field, and the application information field includes the application information.

With reference to the fourth implementation of the first aspect, in a sixth implementation of the first aspect of the embodiments of this application, the GTP-U extension packet header includes an extension header length field, a next extension header type field, a reserved field, and an application information field, and the application information field includes the application information.

With reference to the fifth implementation or the sixth implementation of the first aspect, in a seventh implementation of the first aspect of the embodiments of this application, the application information field starts from a (4^{∗}N+1)^{th} byte in the GTP-U extension packet header, where N is an integer greater than or equal to 1, and a total field length of the GTP-U extension packet header is 4^{∗}M bytes, where M is an integer greater than N.

In this embodiment of this application, the total field length of the GTP-U extension packet header is an integer multiple of four bytes, and the application information field can be four-byte aligned, so that hardware processing performance can be effectively improved.

With reference to any one of the fifth implementation to the seventh implementation of the first aspect, in an eighth implementation of the first aspect of the embodiments of this application, the total field length of the GTP-U extension packet header is 4^{∗}L bytes, where L is an integer greater than or equal to 1.

In this embodiment of this application, the extension header length field and the next extension header type field of the GTP-U extension packet header are followed by the application information field, and there is no reserved field used for padding. This saves a length of the reserved field, and reduces transmission overheads of the GTP-U packet.

With reference to the fourth implementation of the first aspect, in a ninth implementation of the first aspect of the embodiments of this application, the IPv4 packet header includes an option type field, an option length field, and an application information field, and the application information field includes the application information.

With reference to the ninth implementation of the first aspect, in a tenth implementation of the first aspect of the embodiments of this application, the IPv4 packet header further includes a reserved field, the application information field starts from a (4^{∗}N+1)^{th} byte in the IPv4 packet header, and a total field length of the IPv4 packet header is 4^{∗}P bytes, where P is an integer greater than N.

With reference to the ninth implementation of the first aspect, in an eleventh implementation of the first aspect of the embodiments of this application, the application information field starts from a (2^{∗}N+1)^{th} byte in the IPv4 packet header, and a total field length of the IPv4 packet header is Q bytes, where Q is an integer greater than or equal to 2^{∗}N+1.

In this embodiment of this application, a length of the application information field in the IPv4 packet header is an integer multiple of four bytes, and the application information field can be four-byte aligned, so that hardware processing performance can be effectively improved.

With reference to any one of the first aspect or the first implementation to the eleventh implementation of the first aspect, in a twelfth implementation of the first aspect of the embodiments of this application, the first network device includes a base station or a user plane function UPF.

With reference to any one of the first aspect or the first implementation to the twelfth implementation of the first aspect, in a thirteenth implementation of the first aspect of the embodiments of this application, the second network device includes a bearer network device.

With reference to any one of the first aspect or the first implementation to the thirteenth implementation of the first aspect, in a fourteenth implementation of the first aspect of the embodiments of this application, the application information includes one or more of a service-level agreement level SLA level, an application identifier APP ID, a user identifier user ID, a flow identifier flow ID, and a network performance parameter.

In this embodiment of this application, the packet header of the first packet may carry a plurality of types of application information. The second network device can provide diversified network transmission services for the first network device only based on rich application information. The rich application information improves accuracy and a degree of refinement of a network service.

A second aspect of the embodiments of this application provides a packet processing method, including: A second network device receives a first packet sent by a first network device, where a packet header of the first packet carries application information, and the second network device provides a network service for the first packet based on the application information.

In this embodiment of this application, the second network device can identify the application information in the packet header of the first packet, and provide differentiated network services based on the application information, so that a personalized network service is matched based on a transmission requirement, thereby improving a degree of refinement of a network transmission service.

With reference to the second aspect, in a first implementation of the second aspect of the embodiments of this application, the second network device determines, based on the application information, a network slice used to transmit the first packet, where the network slice has a performance requirement corresponding to the application information.

In this embodiment of this application, the second network device can determine the network slice of the first packet based on the application information, where the network slice is a network resource dynamically allocated by a communications service operator, so that network transmission value of user equipment is improved to a maximum extent.

With reference to the second aspect or the first implementation of the second aspect, in a second implementation of the second aspect of the embodiments of this application, the second network device selects a quality of service QoS priority or a bandwidth guarantee policy for the first packet based on the application information.

In this embodiment of this application, the second network device can select the quality of service QoS priority or the bandwidth guarantee policy based on the application information. This ensures a transmission bandwidth, reduces a transmission delay, and reduces a packet loss rate, a delay jitter, and the like of data.

With reference to any one of the second aspect or the first implementation or the second implementation of the second aspect, in a third implementation of the second aspect of the embodiments of this application, the second network device selects a traffic engineering TE transmission path for the first packet based on the application information.

In this embodiment of this application, the second network device can select the transmission path based on the application information, and dynamically reallocate a service flow quickly, accurately, and effectively based on a network topology. In particular, when a network line or device fault occurs, reliability of a network transmission process is improved.

With reference to any one of the second aspect or the first implementation to the third implementation of the second aspect, in a fourth implementation of the second aspect of the embodiments of this application, the second network device enables in-situ flow information telemetry iFIT transmission quality monitoring based on the application information.

In this implementation of this application, the second network device enables the in-situ flow information telemetry iFIT transmission quality monitoring based on the application information, to sense network service quality in real time, thereby fast demarcating and locating a network transmission service fault, and improving network quality of service.

With reference to any one of the second aspect or the first implementation to the fourth implementation of the second aspect, in a fifth implementation of the second aspect of the embodiments of this application, the second network device performs traffic load balancing based on the application information, to determine the transmission path of the first packet.

In this embodiment of this application, the second network device performs traffic load balancing based on the application information, to more accurately eliminate load imbalance between servers, thereby improving a reaction speed and overall performance of a network system.

With reference to the first implementation of the second aspect, in a sixth implementation of the second aspect of the embodiments of this application, the second network device maps the application information to single network slice selection assistance information S-NSSAI, where the S-NSSAI identifies the network slice.

With reference to the fifth implementation of the second aspect, in a sixth implementation of the second aspect of the embodiments of this application, the second network device performs traffic load balancing by using the application information as a hash calculation parameter, to determine the transmission path of the first packet.

In this embodiment of this application, the second network device performs traffic load balancing by using the application information as the hash calculation parameter. The hash calculation parameter is added, so that hash calculation accuracy is improved, and a traffic load balancing result is optimized.

A third aspect of the embodiments of this application provides a first network device, where the first network device is used in a mobile communications network system, and the first network device includes:
a processing unit, configured to generate a first packet, where a packet header of the first packet carries application information; and
a sending unit, configured to send the first packet to a second network device, where the first packet is used to indicate the second network device to provide a network service based on the application information.

With reference to the third aspect, in a second implementation of the third aspect of the embodiments of this application, the first network device includes a receiving unit, configured to receive a second packet, where an inner layer part of the second packet includes the application information.

With reference to the third aspect or the first implementation of the third aspect, in a second implementation of the third aspect of the embodiments of this application, the processing unit is further configured to obtain the application information from the inner layer part of the second packet, and the first network device updates the application information to the packet header of the first packet.

With reference to the third aspect or the first implementation or the second implementation of the third aspect, in a third implementation of the third aspect of the embodiments of this application, the first packet includes a general packet radio system tunneling protocol user plane GTP-U packet.

A fourth aspect of the embodiments of this application provides a second network device, including:
a receiving unit, configured to receive a first packet sent by a first network device, where a packet header of the first packet carries application information; and
a processing unit, configured to provide a network service for the first packet based on the application information.

With reference to the fourth aspect, in a first implementation of the fourth aspect of the embodiments of this application, the processing unit of the second network device is specifically configured to perform one or more of the following:
determining, based on the application information, a network slice used to transmit the first packet, where the network slice has a performance requirement corresponding to the application information;
selecting a quality of service QoS priority or a bandwidth guarantee policy for the first packet based on the application information;
selecting a traffic engineering TE transmission path for the first packet based on the application information;
enabling in-situ flow information telemetry iFIT transmission quality monitoring based on the application information; or
performing traffic load balancing based on the application information, to determine a path for sending the first packet.

With reference to the fourth aspect or the first implementation or the second implementation of the fourth aspect, in a third implementation of the fourth aspect of the embodiments of this application, the processing unit is specifically configured to map the application information to single network slice selection assistance information S-NSSAI, where the S-NSSAI identifies the network slice.

With reference to the fourth aspect or the first implementation to the third implementation of the fourth aspect, in a fourth implementation of the fourth aspect of the embodiments of this application, the processing unit of the second network device is specifically configured to perform traffic load balancing by using the application information as a hash calculation parameter, to determine the path for sending the first packet.

A fifth aspect of the embodiments of this application provides a first network device, including a processor and a communications interface, where the processor is configured to execute instructions, so that the first network device performs the method provided in any one of the first aspect or the optional manners of the first aspect, and the communications interface is configured to receive or send a packet. For specific details of the first network device provided in the fifth aspect, refer to any one of the first aspect or the optional manners of the first aspect. Details are not described herein again.

A sixth aspect of the embodiments of this application provides a second network device, including a processor and a communications interface, where the processor is configured to execute instructions, so that the second network device performs the method provided in any one of the second aspect or the optional manners of the second aspect, and the communications interface is configured to receive or send a packet. For specific details of the second network device provided in the sixth aspect, refer to any one of the second aspect or the optional manners of the second aspect. Details are not described herein again.

A seventh aspect of the embodiments of this application provides a computer-readable storage medium. The computer-readable storage medium stores a program. When executing the program, a computer performs the method provided in any one of the first aspect or the optional manners of the first aspect.

An eighth aspect of the embodiments of this application provides a computer-readable storage medium. The computer-readable storage medium stores a program. When executing the program, a computer performs the method provided in any one of the second aspect or the optional manners of the second aspect.

A ninth aspect of the embodiments of this application provides a computer program product. When the computer program product is executed on a computer, the computer performs the method provided in any one of the first aspect or the optional manners of the first aspect.

A tenth aspect of the embodiments of this application provides a computer program product. When the computer program product is executed on a computer, the computer performs the method provided in any one of the second aspect or the optional manners of the second aspect.

An eleventh aspect of the embodiments of this application provides a chip. When the chip runs on a device, the device is enabled to perform the method provided in any one of the first aspect or the optional manners of the first aspect.

A twelfth aspect of the embodiments of this application provides a chip. When the chip runs on a device, the device is enabled to perform the method provided in any one of the second aspect or the optional manners of the second aspect.

An eleventh aspect of the embodiments of this application provides a network system. The network system includes the first network device provided in the third aspect or the fifth aspect and the second network device provided in the fourth aspect or the sixth aspect.

### BRIEF DESCRIPTION OF DRAWINGS

FIG. 1 is a schematic diagram of a networking architecture and a communications interface of a 5G network according to an embodiment of this application;
FIG. 2 is a schematic diagram of a user plane protocol stack of a 5G network according to an embodiment of this application;
FIG. 3 is a schematic diagram of a technology of mapping a data packet into a bearer network slice in a 5G network;
FIG. 4 is a schematic diagram of an embodiment of a packet processing method 400 according to an embodiment of this application;
FIG. 5 is a schematic diagram of application information according to an embodiment of this application;
FIG. 6 is a schematic diagram of a format of a packet carrying application information in an APN6 network according to an embodiment of this application;
FIG. 7 is a schematic diagram of a format of a packet in which application information is in an IPv6 hop-by-hop extension header according to an embodiment of this application;
FIG. 8 is a schematic diagram of a packet according to an embodiment of this application;
FIG. 9 is a schematic diagram of an embodiment of another packet processing method according to an embodiment of this application;
FIG. 10 is a schematic diagram of a format of a GPT-U extension packet header according to an embodiment of this application;
FIG. 11 is a schematic diagram of a format of another GPT-U extension packet header according to an embodiment of this application;
FIG. 12 is a schematic diagram of a format of an IPv4 option extension header according to an embodiment of this application;
FIG. 13 is a schematic diagram of a format of another IPv4 option extension header according to an embodiment of this application;
FIG. 14 is a schematic diagram of a format of an IPv6 extension packet header according to an embodiment of this application;
FIG. 15 is a schematic diagram of another packet according to an embodiment of this application;
FIG. 16 is a schematic diagram of a network topology according to an embodiment of this application;
FIG. 17 is a schematic diagram of another packet according to an embodiment of this application;
FIG. 18 is a schematic diagram of a structure of a network device 1800 according to an embodiment of this application;
FIG. 19 is a schematic diagram of a structure of a network device 1900 according to an embodiment of this application;
FIG. 20 is a schematic diagram of a structure of a network device 2000 according to an embodiment of this application;
FIG. 21 is a schematic diagram of a structure of a network device 2100 according to an embodiment of this application; and
FIG. 22 is a schematic diagram of a structure of a network system 2200 according to an embodiment of this application.

### DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application.

In this application, terms such as "first", "second", "third", and "fourth" (if exists) in the specification, the claims, and the accompanying drawings are intended to distinguish between similar objects but do not necessarily indicate a specific order or sequence. It should be understood that data termed in such a way is interchangeable in proper circumstances so that embodiments described herein can be implemented in orders other than the order illustrated or described herein. Moreover, terms "include", "contain" and any variants thereof mean to cover non-exclusive inclusion. For example, a process, method, system, product, or device that includes a list of steps or units is not necessarily limited to those expressly listed steps or units, but may include other steps or units that are not expressly listed or inherent to the process, method, product, or device.

In embodiments of this application, the word "example" or "for example" is used to represent giving an example, an illustration, or a description. Any embodiment or design scheme described as "in an example" or "for example" in embodiments of this application should not be explained as being more preferred or having more advantages than another embodiment or design scheme. Exactly, use of the word "example" or "for example" or the like is intended to present a relative concept in a specific manner.

Some terms in this application are described below, to help a person skilled in the art have a better understanding.

A terminal is also referred to as user equipment (User Equipment, UE), and is a device that provides a user with voice and/or data connectivity, for example, a handheld device or a vehicle-mounted device with a wireless connection function. Currently, some terminals are, for example, a mobile phone, a tablet computer, a notebook computer, a palmtop computer, a mobile Internet device (Mobile Internet Device, MID), and a wearable device such as a smart watch, a smart band, and a pedometer.

A radio access network (Radio Access Network, RAN) is a part of a network that connects a terminal to a wireless network. A RAN node or device is a node or device in the radio access network, and may also be referred to as a base station. The RAN implements a radio access technology. Conceptually, the RAN resides between a device (such as a mobile phone, a computer, or any remotely controlled machine), and provides a connection to a core network of the RAN. The RAN device includes but is not limited to: a node B in 5G (gNodeB, gNB), an evolved NodeB (evolved NodeB, eNB), a radio network controller (radio network controller, RNC), a node B (node B, NB), a base station controller (base station controller, BSC), a base transceiver station (base transceiver station, BTS), a home base station (for example, home evolved NodeB, or home NodeB, HNB), a baseband unit (BaseBand Unit, BBU), a transmitting and receiving point (transmitting and receiving point, TRP), a transmitting point (transmitting point, TP), a mobile switching center, and the like, and may further include a wireless fidelity (wireless fidelity, Wi-Fi) access point (access point, AP) and the like.

A bearer network is a service data transmission network between an access network and a data network in a mobile communications network. A bearer network device includes but is not limited to a network edge device, a network core device, and a backbone device, for example, router products such as a broadband remote access server (broadband remote access server, BRAS), a cell site gateway (cell site gateway, CSG), and a service router switch (service router, SR).

The following describes related technologies in this application.

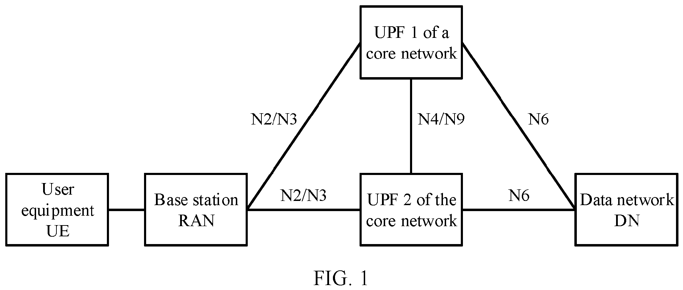

FIG. 1 shows a networking architecture and a communications interface of a 5G network. The networking architecture of the 5G network includes parts such as user equipment, a base station, a bearer network, a core network, and a data network.

After user data for network access of a user is sent from the user equipment to the base station, the base station first encapsulates the user data into a GTP-U tunnel to generate a GTP-U packet, and then sends the GTP-U packet to a UPF network element in the core network. The user data in the GTP-U packet includes application information. That is, GTP-U inner layer data (namely, application layer data) includes the application information. The UPF network element processes the GTP-U packet and finally sends the user data to an external data network of the 5G network. After terminating a GTP-U tunnel from a wireless base station, the UPF network element may alternatively relay the GTP-U packet to another UPF network element through a new GTP-U tunnel, and then the UPF network element sends the user data to the data network.

N2 and N3 shown in FIG. 1 are respectively a control plane interface and a data plane interface for a data flow between the base station and a UPF. N4 and N9 are respectively a control plane interface and a data plane interface for a data flow between UPFs. N6 is a communications interface between a UPF network element and the data network.

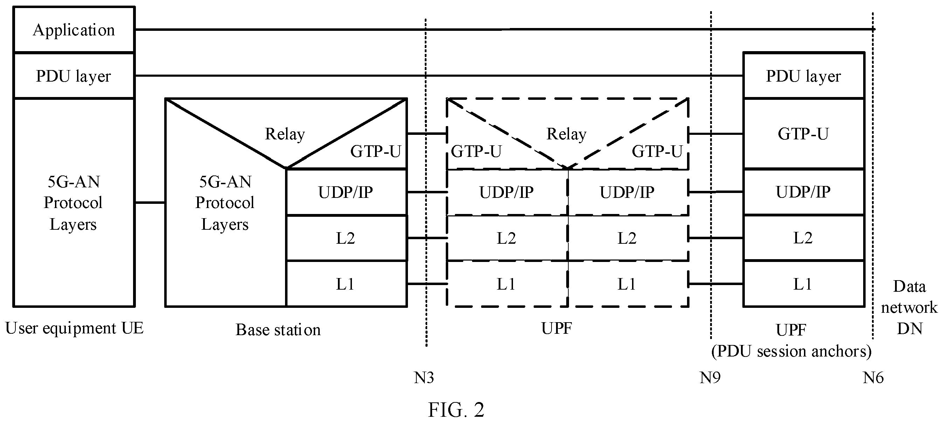

FIG. 2 shows a user plane protocol stack of a 5G network. When a terminal is connected to the 5G network, the terminal encapsulates application layer data (application), a transport layer (transport layer) packet header, and a protocol data unit (protocol data unit, PDU) packet header into a 5G access protocol header (5G-AN protocol layers), and then sends data to a base station. The PDU packet header may be an IPv6 or IPv4 packet header, or an Ethernet frame header plus an IPv6 or IPv4 packet header.

After receiving the packet sent by the user equipment, the base station first removes the 5G access protocol header to obtain an inner layer part of the packet, namely, an application layer data part. The base station then encapsulates a GTP-U packet header, a user datagram protocol (user datagram protocol, UDP) packet header and/or an internet protocol (Internet Protocol, IP) packet header, and another packet header based on the inner layer part of the packet to obtain a first packet. Then, the first packet is sent to a UPF network element of a core network through a bearer network device.

In FIG. 2, "LI" represents a physical layer of the user plane protocol stack, "L2" represents a data link layer of the user plane protocol stack, "Relay" represents a relay process of the base station or the UPF, and "PDU Layer" corresponds to a protocol data unit layer of a PDU session carried between the user equipment and the data network (Data Network, DN).

A packet header of the first packet is a packet header encapsulated by the base station, and includes but is not limited to the GTP-U packet header, the UDP packet header, or the IP packet header. First packets including the GTP-U packet header are collectively referred to as a GTP-U packet.

After receiving the first packet, the UPF network element in the core network decapsulates or removes a packet header of the first packet, and then forwards content corresponding to the first packet to the external data network. Alternatively, the UPF network element encapsulates a new GTP-U packet header, a new UDP packet header and/or a new IP packet header, and another packet header and then forwards content corresponding to the first packet obtained after the encapsulation to a next UPF network element, where UPFs of N6 interfaces are referred to as PDU session anchors (PDU Session Anchors). Between the base station and a UPF network element and between two UPF network elements, the bearer network device is responsible for transmitting the packet encapsulated in the GTP-U tunnel.

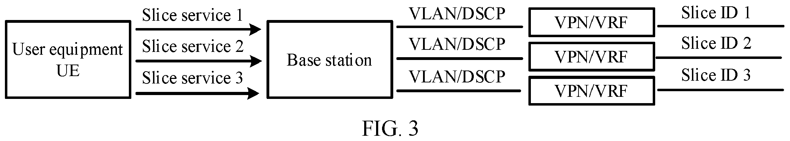

FIG. 3 is a schematic diagram of a technology of mapping a service packet into a bearer network slice in a 5G network. A policy control function (policy control function, PCF) network element on a 5G core network control plane delivers a network slice selection policy (network slice selection policy, NSSP) to user equipment to specify a mapping relationship between a service packet and a slice identifier S-NSSAI. The user equipment applies to the 5G network through the base station for attaching to the slice, and subsequently transmits traffic of an application by using a resource of the slice.

The base station maps the slice identifier S-NSSAI to a virtual local area network (virtual local area network, VLAN) identifier or a differentiated services code point (differentiated services code point, DSCP) identifier of a GTP-U tunnel in an outer layer, and sends a packet of the GTP-U tunnel to a bearer network.

A bearer network device may process and forward a data packet by using a specified slice resource based on the VLAN identifier or the DSCP identifier, or a bearer network device may indirectly identify application information based on the VLAN identifier or the DSCP identifier. The bearer network device may transmit the first packet by using a slice network corresponding to the slice identifier (slice ID), for example, slice networks corresponding to a slice ID 1, a slice ID 2, and a slice ID 3. The bearer network device may alternatively forward the first packet through a virtual private network (virtual private network, VPN) or virtual routing and forwarding (virtual routing and forwarding, VRF).

The following specifically describes the technical solution provided in the embodiments by using a method 400.

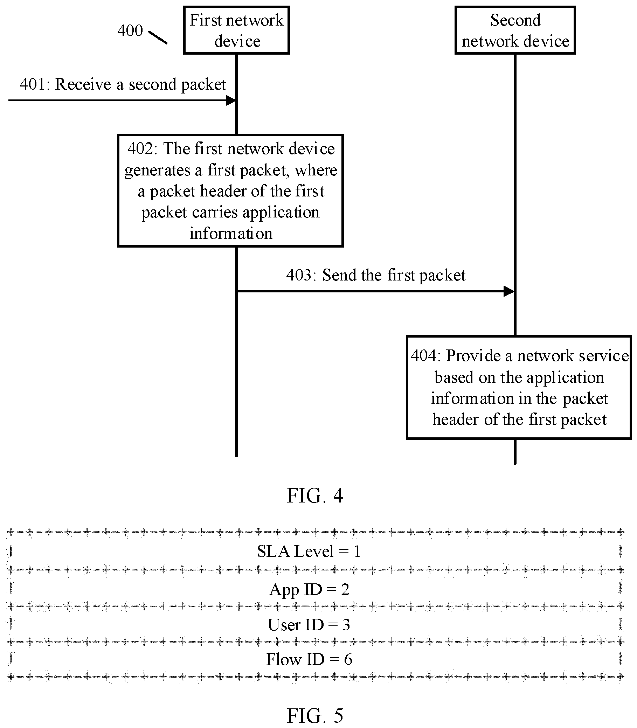

FIG. 4 is a flowchart of a packet processing method 400 according to an embodiment of this application. The packet processing method includes the following steps.

401: A first network device receives a second packet.

For application to the network scenario shown in FIG. 1, this method embodiment is described by using an example in which a base station is used as the first network device and a bearer network device is used as a second network device.

The second packet received by the base station is a packet sent by user equipment to the base station.

In an example, the user equipment encapsulates a 5G access protocol header into a packet carrying application information, to obtain the second packet, the user equipment sends the second packet to the base station, and the base station receives the second packet sent by the user equipment.

402: The first network device generates a first packet, where a packet header of the first packet carries the application information.

The application information included in the first packet generated by the first network device may include one or more of the following, for example, a service-level agreement level (Service-Level Agreement Level, SLA level), an application identifier (application identifier, APP ID), a user identifier (user identifier, user ID), a flow identifier (flow identifier, flow ID), and a network performance parameter.

FIG. 5 is a schematic diagram of application information of user equipment. In the figure, "1", "2", "3", or "6" is a preset identification number whose meaning may be predefined. For example, "SLA Level = 1" may be defined to represent traffic corresponding to a quality of service requirement that a delay is less than 20 ms, "App ID = 2" may be defined to represent traffic of an application "Arena of Valor", "User ID = 3" may be defined to represent traffic of a player whose account ID is 3, and "Flow ID = 6" may be defined to represent traffic of a "walk instruction".

In an example, the first network device may generate the first packet, for example, a network connectivity detection packet, and add the application information to the packet, to indicate that the packet is the network connectivity detection packet. That is, step 401 is an optional step.

In another example, the first network device may receive the second packet sent by another device, and generate the first packet based on the second packet. The first network device generates the first packet based on the second packet in the following two cases:

Example A: The second packet sent by the user equipment may not carry the application information. In this case, after determining the application information based on the received second packet, the first network device may update the application information based on the second packet, to generate the first packet.

Example B: An inner layer part of the second packet carries the application information. The base station may update, to the packet header, the application information carried in the inner layer part of the second packet sent by the user equipment, to generate the first packet.

After receiving the second packet, the base station may first remove the 5G access protocol header of the second packet, to obtain the inner layer part of the second packet. The base station encapsulates the packet header into the inner layer part of the second packet to obtain the first packet, and the base station updates the packet header of the first packet.

The base station may update the packet header of the first packet before encapsulating the packet header or after encapsulating the packet header, or may update and encapsulate the packet header simultaneously. This is not specifically limited herein. There are a plurality of manners of updating the packet header by the base station, which may be copying, adding, or modifying. This is not specifically limited herein. Copying is used as an example. The base station may copy the application information of the inner layer part of the second packet to a GTP-U extension packet header, an IPv6 extension packet header, or an IPv4 packet header of the packet header of the first packet. This is not specifically limited herein.

A format of the GTP-U extension packet header, the IPv6 extension packet header, or the IPv4 packet header obtained through the copying is consistent with a corresponding packet format described in this embodiment of this application.

The base station may copy the application information to one location in the packet header of the first packet, or may copy the application information to a plurality of locations. This is not specifically limited herein.

In an example, the application information may be carried in inner layer data, namely, application layer data, of the second packet. When the application information is carried in the inner layer data of the second packet, the application information may be carried in an IPv6 extension header of an IPv6 service packet, and specifically may be carried in an IPv6 hop-by-hop option (Hop-by-Hop Option) extension header, an IPv6 destination option (Destination Option) extension header, an IPv6 routing extension header (Routing Header), another IPv6 extension header, or a TLV extensible sub-option thereof. This is not specifically limited herein.

In this embodiment of this application, a network in which the application information is carried in the extension header of the IPv6 service packet may be referred to as application-aware IPv6 networking (application-aware IPv6 networking, APN6), and the application information carried in the packet of the APN6 is referred to as APN6 application information.

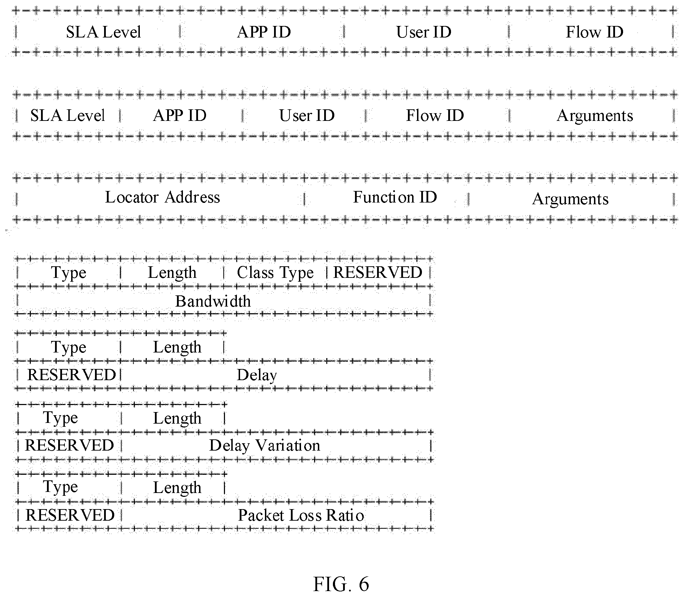

FIG. 6 is a schematic diagram of a format of a packet carrying application information in an APN6 network. "SLA level" is a service-level agreement level, "APP ID" is an application identification number, "User ID" is a user identification number, "Flow ID" is a flow identification number, "Arguments" represents other parameters, "Locator Address" is an address prefix, "Bandwidth" is a bandwidth, "Delay" is a delay, "Delay Variation" is a delay jitter, "Packet Loss Ratio" is a packet loss rate, "Type" is a type field, "Length" is a length field, "Class Type" is a class type field, and "RESERVED" is a reserved field.

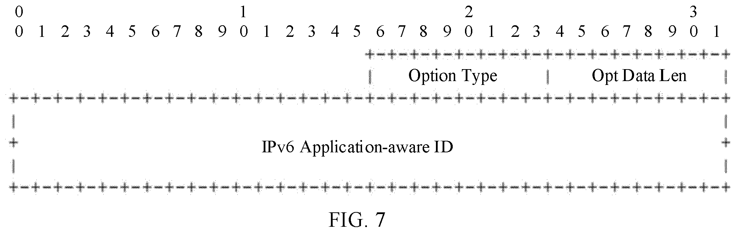

FIG. 7 shows a format of a packet corresponding to an IPv6 hop-by-hop extension header carrying application information, where "IPv6 Application-aware ID" represents an APN6 application information field, which may include the application information in the one or more items shown in FIG. 5.

In an example, if a packet of user equipment needs to carry the application information, a 5G network system needs to complete a pre-process of user plane work, including: an application provider or an application user purchases an application-aware IPv6 networking (application-aware IPv6 networking, APN6) service. A network service provider allocates APN6 application information, the application provider delivers the application information to or pre-configures the application information for an application (application, APP) of the user equipment, and the network service provider configures, in a 5G network, a network resource or service required by the APN6 service, for example, a slice, quality of service (quality of service, QoS), a transmission path, or in-situ flow information telemetry (in-situ flow information telemetry, iFIT) performance monitoring. The network service provider associates the resource with the APN6 service.

After the foregoing pre-process is completed, the APP of the user equipment notifies, by using a software development kit (software development kit, SDK), an operating system application programming interface (application programming interface, API), or a device driver interface, a terminal device of the APN6 application information that needs to be carried in a data packet to be sent by the terminal device.

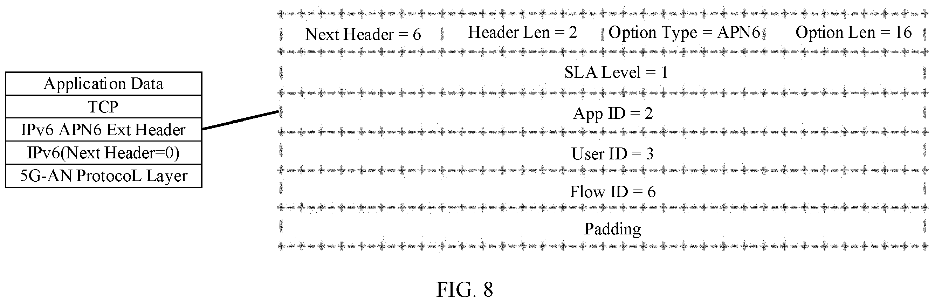

FIG. 8 is a schematic diagram of content of a packet sent by user equipment to a base station. "IPv6 APN6 Ext Header" represents an IPv6 hop-by-hop option extension packet header, which carries the application information shown in FIG. 5.

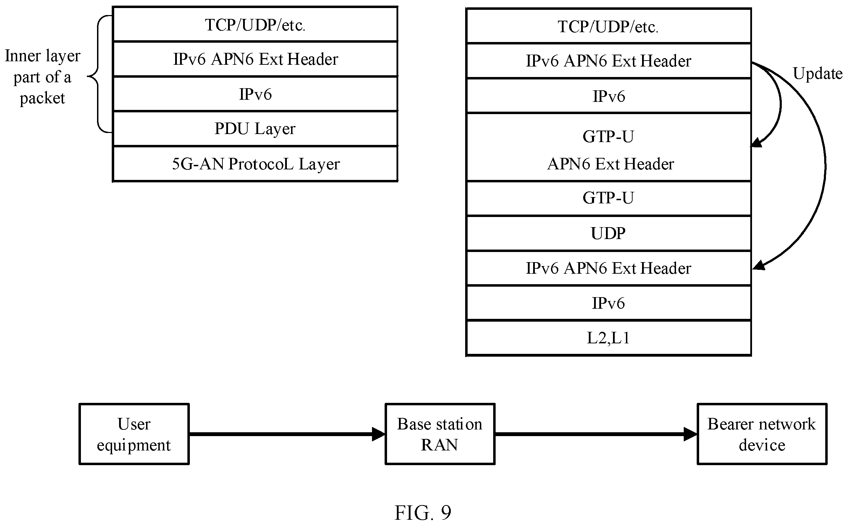

FIG. 9 is a schematic diagram of updating, by a base station, application information carried in an inner layer part of a second packet to a packet header of a first packet. The base station updates APN6 application information carried in "IPv6 APN6 Ext Header" in the inner layer part of the second packet to "GTP-U APN6 Ext Header" or "IPv6 APN6 Ext Header" in an outer layer.

For carrying the application information in the packet header of the first packet, the following uses the APN6 application information as an example. When the first packet is a GTP-U packet, a format of an extension header carrying the application information in the packet header of the first packet is described.

### 1. GTP-U extension packet header

In this embodiment of this application, the GTP-U extension packet header includes two formats, which are separately described below.

### 2.1. Format 1 of the GTP-U extension packet header

The GTP-U extension packet header in the first format starts with an extension header length field of one byte and ends with a next extension header type field of one byte.

The GTP-U extension packet header in the first format further includes a reserved field and an application information field, and the GTP-U extension packet header has a length of an integer multiple of four bytes and/or is four-byte aligned after a line break. The application information field starts after a line break following the extension header length field and is four-byte aligned. A field part that is less than four bytes in each line is padded with a reserved field.

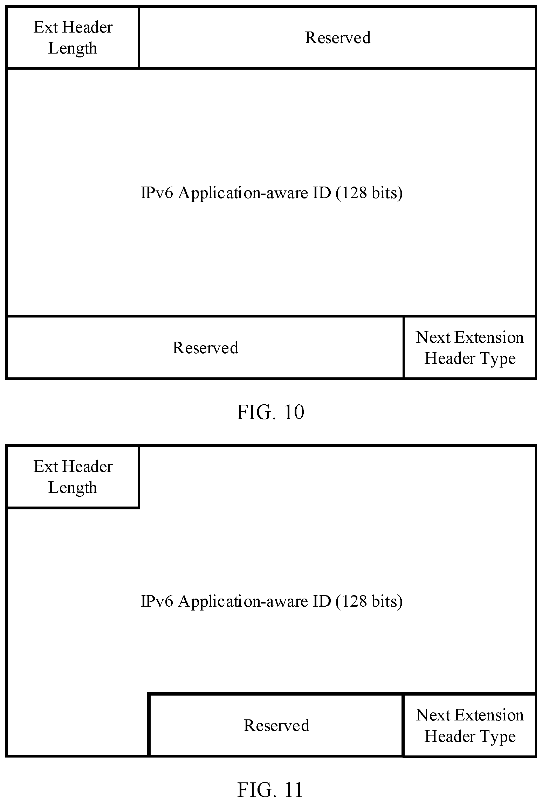

FIG. 10 shows the first format of the GTP-U extension packet header. "Ext Header Length" is an extension header length field with a length of one byte, "IPv6 Application-aware ID" represents an APN6 application information field with a length of 16 bytes and including the application information in FIG. 5, "Reserved" before "IPv6 Application-aware ID" is a reserved field with a length of three bytes, "Reserved" after "IPv6 Application-aware ID" is also a reserved field with a length of three bytes, and "Next Extension Header Type" is a next extension header type field with a length of one byte. The entire GTP-U extension packet header field shown in FIG. 10 is 24 bytes.

It can be understood that, the application information field in the GTP-U extension packet header in FIG. 10 is the APN6 application information field with a length of 16 bytes, which is exactly an integer multiple of four bytes. When the application information field is not an integer multiple of four bytes, a reserved field is used for padding after the application information field, to ensure that the GTP-U extension packet header has the length of the integer multiple of four bytes and is four-byte aligned after a line break.

The application information field in the format 1 starts after a line break following the extension header length field and is four-byte aligned. This helps improve hardware processing performance.

### 2.2. Format 2 of the GTP-U extension packet header

The GTP-U extension packet header in the second format starts with an extension header length field of one byte and ends with a next extension header type field of one byte.

The GTP-U extension packet header in the second format further includes a reserved field and an application information field, and the GTP-U extension packet header has a length of an integer multiple of four bytes and is four-byte aligned after a line break. The application information field follows the extension header length field, and a field part whose end line is less than four bytes is padded with a reserved field.

FIG. 11 shows the second format of the GTP-U extension packet header. "Ext Header Length" is an extension header length field with a length of one byte, "IPv6 Application-aware ID" is an APN6 application information field with a length of 16 bytes, "Reserved" after "IPv6 Application-aware ID" is a reserved field with a length of two bytes, and "Next Extension Header Type" is a next extension header type field with a length of one byte. The entire GTP-U extension packet header field is 20 bytes.

In the format 2, the application information field does not have a line break after the extension header length field, so that a reserved field without an actual meaning is reduced. This can reduce transmission overheads. The format 1 may be used when a benefit of reducing the transmission overheads of the reserved field is not obvious.

### 2. IPv4 packet header

In this embodiment of this application, the IPv4 packet header includes two formats, which are separately described below.

### 2.1. Format 1 of the IPv4 packet header

The IPv4 packet header in the first format starts with an option type field with one byte and an option length field with one byte. The option type field and the option length field are followed by a reserved field and an application information field. The application information field starts after a line break following the reserved field and is four-byte aligned. The entire IPv4 packet header field has a length of an integer multiple of four bytes and follows a line break by four bytes. A field part that is less than four bytes in each line is padded with a reserved field.

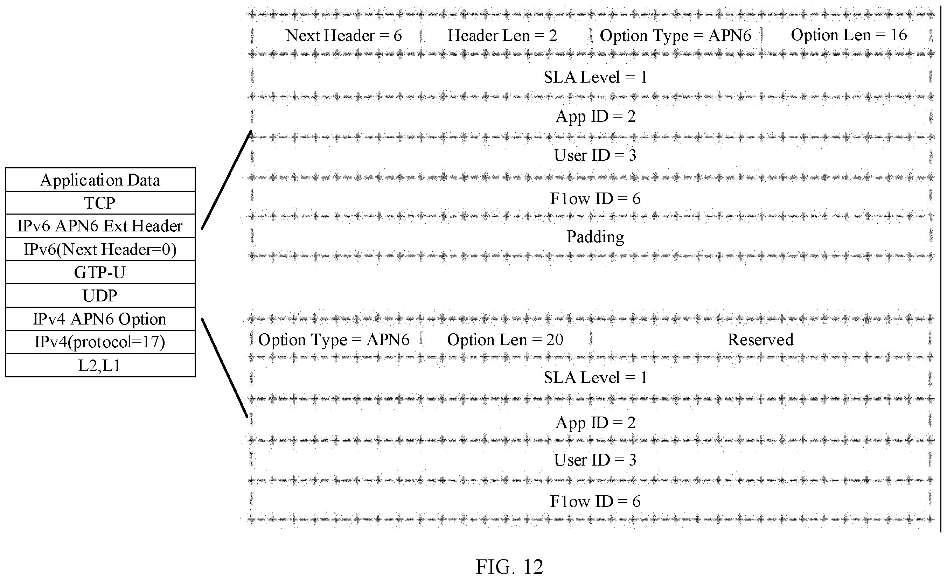

FIG. 12 shows the first format of the IPv4 packet header. "Option Type" is an option type field with a length of one byte, "Option Len" is an option length field with a length of one byte, "Reserved" is a reserved field with a length of two bytes, and "SLA Level", "App ID", "User ID", and "Flow ID" are an application information field with a length of 16 bytes. A length of an option extension header field of the IPv4 packet header is 20 bytes.

### 3.2. Format 2 of an option extension header of IPv4

The IPv4 packet header in the second format starts with an option type field with one byte and an option length field with one byte.

The option type field and the option length field are followed by an application information field, and there is no other field in between. The application information field starts after a line break following the option length field and is four-byte aligned.

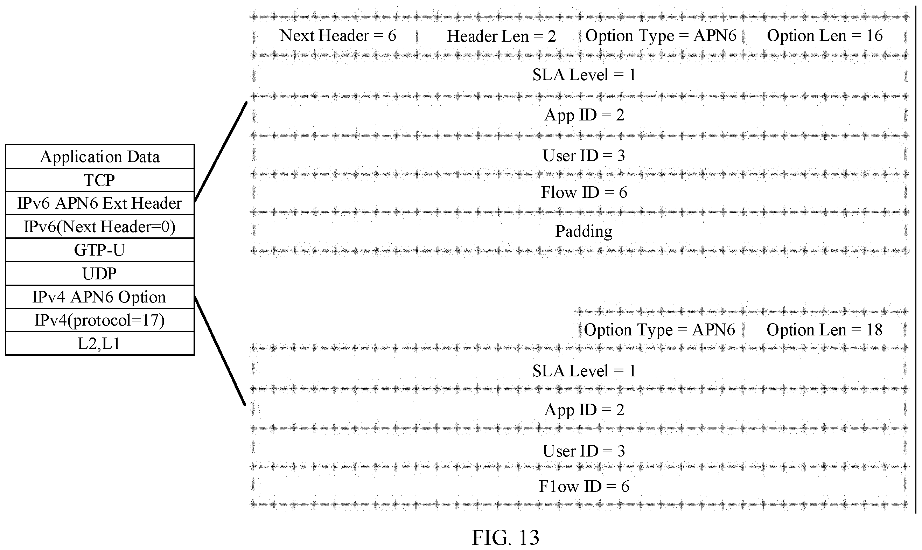

FIG. 13 shows the second format of the IPv4 packet header. "Option Type" is an option type field with a length of one byte, "Option Len" is an option length field with a length of one byte, and "SLA Level", "App ID", "User ID", and "Flow ID" are an application information field with a length of 16 bytes. A length of an option extension header field of the IPv4 packet header is 20 bytes.

### 3. IPv6 extension packet header

The IPv6 extension packet header in this embodiment of this application includes a next extension header field, an extension header length field, an option type field, an option length field, and an application information field. The entire IPv6 extension packet has a length of an integer multiple of four bytes and is four-byte aligned.

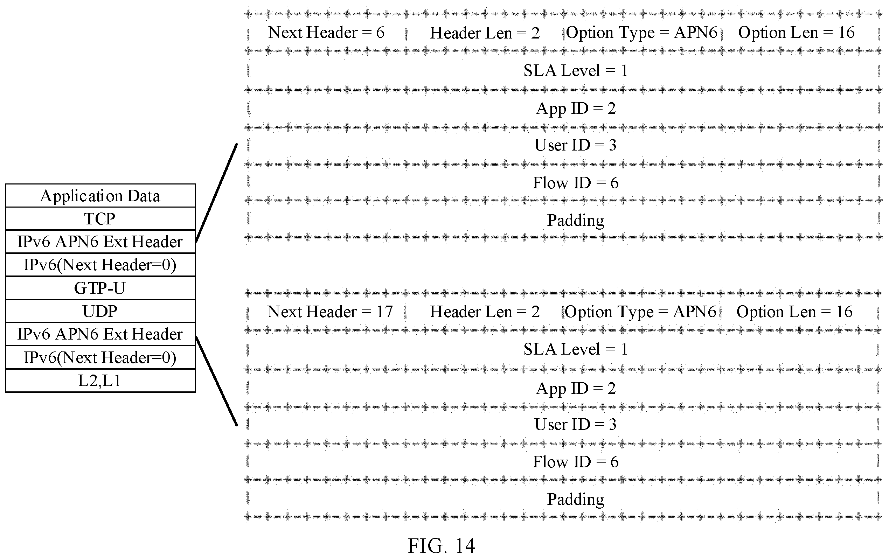

FIG. 14 shows a format of the IPv6 extension packet header. "Next Header" is a next extension header field with a length of one byte, "Header Len" is an extension header length field with a length of one byte, "Option Type" is an option type field with a length of one byte, "Option Len" is an option length field with a length of one byte, "SLA Level", "App ID", "User ID", and "Flow ID" are an application information field with a length of 16 bytes, and "Padding" is a padding field with a length of 4 bytes. A field length of the entire IPv6 extension packet header is 20 bytes.

403: The first network device sends the first packet to a second network device, where the packet header of the first packet carries the application information.

For application to the scenario shown in FIG. 1, the base station sends the first packet to the bearer network device.

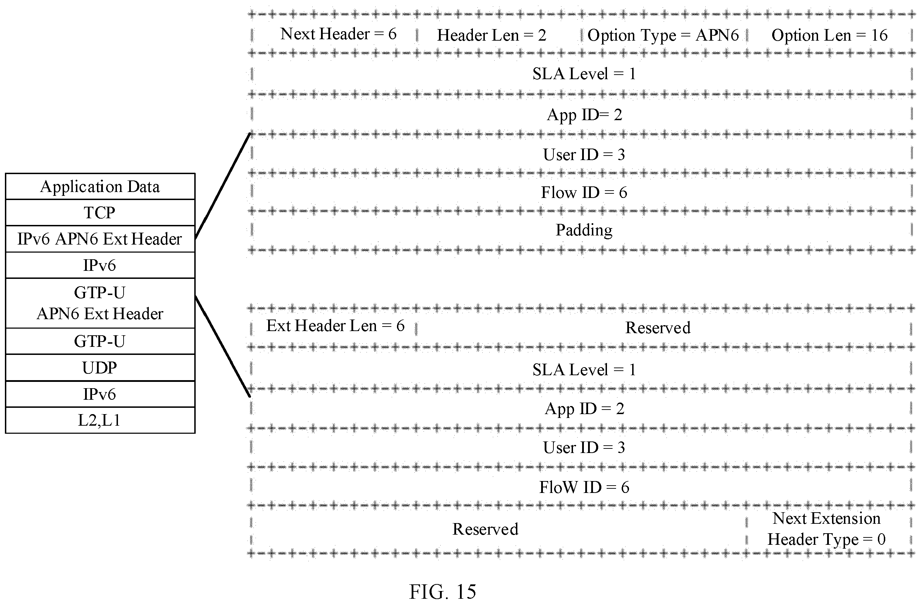

FIG. 15 is a schematic diagram of a GTP-U packet sent by a base station to a bearer network device. "GTP-U APN6 Ext Header" is a GTP-U extension packet header of the first packet and carries the APN6 application information. The content may be consistent with the application information carried in IPv6 Ext Header in the inner layer of the packet.

404: The second network device provides a network service based on the application information in the packet header of the first packet.

For application to the scenario shown in FIG. 1, the bearer network device provides the network service based on the application information in the packet header of the first packet.

The bearer network device may provide a plurality of forms of network services based on the application information in the packet header of the first packet. The network services include: determining, based on the application information, a network slice used to transmit the first packet, selecting a quality of service QoS priority or a bandwidth guarantee policy for the first packet, selecting a transmission path for the first packet, enabling in-situ flow information telemetry iFIT transmission quality monitoring, and performing traffic load balancing, to determine the transmission path for the first packet. This is not specifically limited herein.

In this embodiment of this application, the bearer network device may provide the plurality of forms of network services based on the application information. The network services are separately described below.

### 1. The bearer network device determines a network slice based on the application information.

That the bearer network device determines a network slice based on the application information includes: the bearer network device maps the application information to the network slice. Several different mapping rules are separately described below.

Table 1 provides an example of five pieces of application information, respectively corresponding to five applications. For example, "SLA Level = 7, App ID = 1, User ID = 3, Flow ID = 6" corresponds to game 1. Numbers in the table represent ID numbers, and meanings of the numbers may be predefined.

**Table 1**

| Sequence number | Application information | Application |
|---|---|---|
| A | SLA Level = 7, App ID = 1, User ID = 3, Flow ID = 6 | Game 1 |
| B | SLA Level = 1, App ID = 2, User ID = 4, Flow ID = 7 | Game 2 |
| C | SLA Level = 8, App ID = 3, User ID = 5, Flow ID = 8 | Game 3 |
| D | SLA Level = 1, App ID = 4, User ID = 6, Flow ID = 9 | Live broadcast 1 |
| E | SLA Level = 0, App ID = 5, User ID = 7, Flow ID = 10 | Live broadcast 2 |

### 1.1. One piece of application information is mapped to one slice to form an application-level slice

The application information in Table 1 is used as an example. The bearer network device may map each piece of application information to a single network slice to form an application-level slice.

Table 2 provides an example of mapping the five pieces of application information in Table 1 to five network slices. After allocation, each application exclusively uses one network slice and a network service corresponding to the slice.

**Table 2**

| Application information | Application | Slice |
|---|---|---|
| SLA Level = 7, App ID = 1, User ID = 3, Flow ID = 6 | Game 1 | Slice 1 |
| SLA Level = 1, App ID = 2, User ID = 4, Flow ID = 7 | Game 2 | Slice 2 |
| SLA Level = 8, App ID = 3, User ID = 5, Flow ID = 8 | Game 3 | Slice 3 |
| SLA Level = 1, App ID = 4, User ID = 6, Flow ID = 9 | Live broadcast 1 | Slice 4 |
| SLA Level = 0, App ID = 5, User ID = 7, Flow ID = 10 | Live broadcast 2 | Slice 5 |

### 1.2. A plurality of pieces of application information are mapped to a group of slices to form application type-level slices

The application information in Table 1 is used as an example. The bearer network device may map a group of application information to a single network slice to form an application type-level slice.

In Table 3, three pieces of application information corresponding to the applications "game 1", "game 2", and "game 3" are used as a group of application information and mapped to "slice 6". Application information corresponding to the applications "live broadcast 1" and "live broadcast 2" is mapped to "slice 7". After mapping, application information of a same type of application shares one network slice, and the bearer network may provide a corresponding network service based on an application type.

**Table 3**

| Application information | Application | Slice |
|---|---|---|
| SLA Level = 7, App ID = 1, User ID = 3, Flow ID = 6 | Game 1 | Slice 6 |
| SLA Level = 1, App ID = 2, User ID = 4, Flow ID = 7 | Game 2 | Slice 6 |
| SLA Level = 8, App ID = 3, User ID = 5, Flow ID = 8 | Game 3 | Slice 6 |
| SLA Level = 1, App ID = 4, User ID = 6, Flow ID = 9 | Live broadcast 1 | Slice 7 |
| SLA Level = 0, App ID = 5, User ID = 7, Flow ID = 10 | Live broadcast 2 | Slice 7 |

### 1.3. All application information is mapped to one slice to form an application awareness-level slice

The application information in Table 1 is used as an example. The bearer network device may map all the application information to a single network slice to form an application awareness-level slice.

Table 4 maps all the application information to "slice 8". After mapping, all the application information shares one network slice.

**Table 4**

| Application information | Application | Slice |
|---|---|---|
| SLA Level = 7, App ID = 1, User ID = 3, Flow ID = 6 | Game 1 | Slice 8 |
| SLA Level = 1, App ID = 2, User ID = 4, Flow ID = 7 | Game 2 | Slice 8 |
| SLA Level = 8, App ID = 3, User ID = 5, Flow ID = 8 | Game 3 | Slice 8 |
| SLA Level = 1, App ID = 4, User ID = 6, Flow ID = 9 | Live broadcast 1 | Slice 8 |
| SLA Level = 0, App ID = 5, User ID = 7, Flow ID = 10 | Live broadcast 2 | Slice 8 |

### 1.4. A plurality of pieces of application information is mapped to one slice based on content of the application information to form an application quality of service-level slice

The application information in Table 1 is used as an example. The bearer network device may map application information whose values of "SLA level" are the same in the plurality of pieces of application information to a single network slice to form an application quality of service-level slice.

In Table 5, application information with a same "SLA level" value in the five pieces of application information is mapped to "slice 10". After mapping, applications with the same "SLA level" value share one network slice.

**Table 5**

| Application information | Type | Slice |
|---|---|---|
| SLA Level = 7, App ID = 1, User ID = 3, Flow ID = 6 | Quality level 1 | Slice 9 |
| SLA Level = 1, App ID = 2, User ID = 4, Flow ID = 7 | Quality level 2 | Slice 10 |
| SLA Level = 8, App ID = 3, User ID = 5, Flow ID = 8 | Quality level 3 | Slice 11 |
| SLA Level = 1, App ID = 4, User ID = 6, Flow ID = 9 | Quality level 2 | Slice 10 |
| SLA Level = 0, App ID = 5, User ID = 7, Flow ID = 10 | Quality level 4 | Slice 12 |

Referring to Table 6, the bearer network device may alternatively map one or a combination of a plurality of values of "SLA Level", "App ID", "User ID", or "Flow ID" in the plurality of pieces of application information, as a group of information, to a single network slice, to form a quality of service-level network slice.

**Table 6**

| Application information | Type | Slice |
|---|---|---|
| App ID = 1, App ID = 3, App ID = 5 | Quality level 5 | Slice 13 |
| App ID = 2, App ID = 4 | Quality level 6 | Slice 14 |
| User ID = 5, User ID = 6, User ID = 7 | Quality level 5 | Slice 13 |
| User ID = 5, User ID = 6 | Quality level 7 | Slice 15 |
| Flow ID = 6, Flow ID = 7, Flow ID = 8 | Quality level 8 | Slice 16 |
| Flow ID = 9, Flow ID = 10 | Quality level 7 | Slice 15 |
| App ID = 3, User ID = 5, App ID = 4, Flow ID = 9 | Quality level 5 | Slice 13 |
| App ID = 1, User ID = 6 | Quality level 6 | Slice 14 |
| SLA Level = 1, App ID = 4, User ID = 6, Flow ID = 9 | Quality level 5 | Slice 13 |

### 2. The bearer network device uses different QoS levels based on application information

The application information in Table 1 is used as an example. The bearer network device selects a QoS priority based on the application information.

Table 7 provides an example of quality of service QoS priorities corresponding to a plurality of pieces of application information.

**Table 7**

| Application information | Application | QoS level |
|---|---|---|
| SLA Level = 7, App ID = 1, User ID = 3, Flow ID = 6 | Game 1 | EF |
| SLA Level = 1, App ID = 2, User ID = 4, Flow ID = 7 | Game 2 | AF2 |
| SLA Level = 8, App ID = 3, User ID = 5, Flow ID = 8 | Game 3 | AF2 |
| SLA Level = 1, App ID = 4, User ID = 6, Flow ID = 9 | Live broadcast 1 | BE |
| SLA Level = 0, App ID = 5, User ID = 7, Flow ID = 10 | Live broadcast 2 | BE |

### 3. The bearer network device uses a bandwidth guarantee policy based on application information

The application information in Table 1 is used as an example. The bearer network device may select a bandwidth guarantee policy based on the application information.

Table 8 provides an example of bandwidth policies corresponding to a plurality of pieces of application information. For example, the bearer network device selects, based on application information "SLA Level = 7, App ID = 1, User ID = 3, Flow ID = 6" corresponding to "game 1", a corresponding bandwidth transmission policy of 100 Mbit/s for a first packet including the application information.

**Table 8**

| Application information | Application | Bandwidth policy |
|---|---|---|
| SLA Level = 7, App ID = 1, User ID = 3, Flow ID = 6 | Game 1 | 100 Mbit/s |
| SLA Level = 1, App ID = 2, User ID = 4, Flow ID = 7 | Game 2 | 100 Mbit/s |
| SLA Level = 8, App ID = 3, User ID = 5, Flow ID = 8 | Game 3 | 100 Mbit/s |
| SLA Level = 1, App ID = 4, User ID = 6, Flow ID = 9 | Live broadcast 1 | 1 Gbit/s |
| SLA Level = 0, App ID = 5, User ID = 7, Flow ID = 10 | Live broadcast 2 | 1 Gbit/s |

### 4. The bearer network device selects a transmission path based on the application information

The application information in Table 1 is used as an example. The bearer network device may select a transmission path based on the application information.

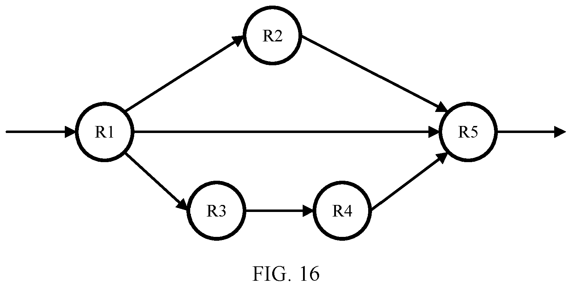

FIG. 16 is a schematic diagram of a network topology having three transmission paths. The network topology shown in FIG. 16 is used as an example. Traffic corresponding to a first packet enters a network from R1 and leaves the network from R5. There are three transmission paths in the network:
Path 1: R1→R2→R5
Path 2: R1→R5
Path 3: R1→R3→R4→R5

Table 9 provides an example of selecting, by the bearer network device, a traffic engineering transmission path for the first packet based on application information.

**Table 9**

| Application information | Application | Transmission path |
|---|---|---|
| SLA Level = 7, App ID = 1, User ID = 3, Flow ID = 6 | Game 1 | Path 1 |
| SLA Level = 1, App ID = 2, User ID = 4, Flow ID = 7 | Game 2 | Path 2 |
| SLA Level = 8, App ID = 3, User ID = 5, Flow ID = 8 | Game 3 | Path 2 |
| SLA Level = 1, App ID = 4, User ID = 6, Flow ID = 9 | Live broadcast 1 | Path 1 |
| SLA Level = 0, App ID = 5, User ID = 7, Flow ID = 10 | Live broadcast 2 | Path 3 |

### 5. The bearer network device enables in-situ flow information telemetry iFIT transmission quality monitoring based on the application information

Table 10 provides an example of enabling, by the bearer network device, an in-situ flow information telemetry iFIT service based on application information.

The bearer network device may enable in-situ flow information telemetry iFIT transmission quality monitoring based on the application information. For example, an in-situ flow information telemetry iFIT service enabled by the bearer network device based on application information "SLA Level = 7, App ID = 1, User ID = 3, Flow ID = 6" corresponding to "game 1" is "The iFIT service is enabled and detection is performed once every second".

**Table 10**

| Application information | Application | iFIT service |
|---|---|---|
| SLA Level = 7, App ID = 1, User ID = 3, Flow ID = 6 | Game 1 | The iFIT service is enabled and detection is performed once every second |
| SLA Level = 1, App ID = 2, User ID = 4, Flow ID = 7 | Game 2 | The iFIT service is disabled |
| SLA Level = 8, App ID = 3, User ID = 5, Flow ID = 8 | Game 3 | The iFIT service is enabled, each packet is detected once (packet-by-packet detection), and a passport reporting mode is used |
| SLA Level = 1, App ID = 4, User ID = 6, Flow ID = 9 | Live broadcast 1 | The iFIT service is enabled and detection is performed once every 200 ms |
| SLA Level = 0, App ID = 5, User ID = 7, Flow ID = 10 | Live broadcast 2 | The iFIT service is disabled |

### 6. The bearer network device performs traffic load balancing based on the application information, to determine a transmission path of the first packet

The network topology shown in FIG. 16 is used as an example. There are three reachable paths from R1 to R5 in the network. The bearer network device may perform traffic load balancing by using the application information as an input parameter for hash calculation to determine the transmission path of the first packet.

The bearer network device may perform hash calculation for a source IP address, a destination IP address, a transport layer protocol type, a transport layer source port number, a transport layer destination port number, and the application information, may perform hash calculation for a source IP address, a destination IP address, and the application information, or may perform hash calculation only for the application information. This is not specifically limited herein.

For example, the bearer network device performs hash calculation for the source IP address, the destination IP address, and the application information. For example, the five pieces of application information in Table 1 correspond to traffic of five types of application information with a same source IP address and a same destination IP address. If only the source IP address and the destination IP address are used for hash calculation, a same result is obtained, and normalized mapping to only one transmission path can be implemented based on the result. However, after the bearer network device uses the application information as an input parameter for the hash calculation, five different results are obtained. That is, five types of traffic may be mapped to three transmission paths to achieve traffic load balancing.

After step 404 is performed, the bearer network device forwards the first packet to a UPF network element, and the UPF network element may decapsulate the packet header of the first packet, then encapsulate a new packet header into the first packet, and send the first packet to another UPF network element through the bearer network device. A process of encapsulating the packet header is similar to a step performed by the base station in step 402, and details are not described herein again.

The UPF may alternatively decapsulate the packet header of the first packet, and process the first packet for sending to a data network.

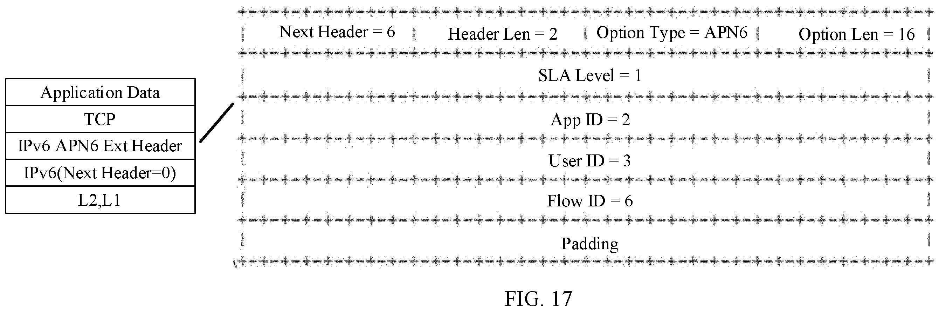

FIG. 17 is a schematic diagram of a packet sent by a UPF network element in a core network to a data network. The packet header sent to the data network does not carry application information.

In the foregoing embodiment, a working process is in an uplink direction from user equipment to the data network. A data plane working process in a downlink direction from the data network to the user equipment is similar thereto, and details are not described herein again.

The foregoing describes the packet processing method in the embodiments of this application. The following describes a network device in the embodiments of this application. The network device described below has any function of the first network device or the second network device in the packet processing method.

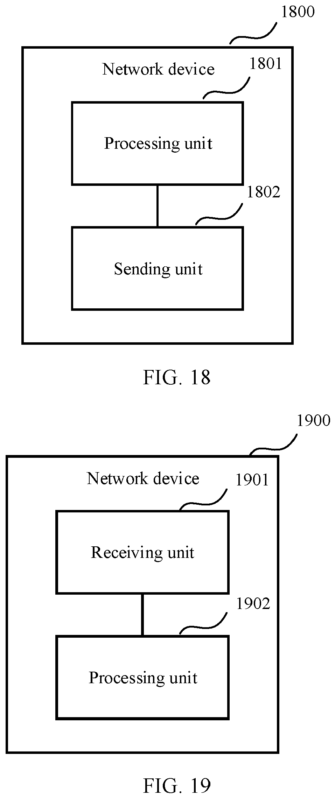

FIG. 18 is a schematic diagram of a structure of a network device 1800 according to an embodiment of this application. The network device 1800 corresponds to the first network device in the foregoing method embodiments. As shown in FIG. 18, the network device 1800 includes a processing unit 1801, configured to perform step 401 and step 402; and a sending unit 1802, configured to perform step 403.

The modules in the network device 1800 and the foregoing other operations and/or functions are respectively used to implement various steps and methods implemented by the first network device in the method embodiments. For specific details, refer to the foregoing packet processing method. For brevity, details are not described herein again.

When the network device 1800 processes a packet, division of the foregoing functional modules is used only as an example for description. During actual application, the foregoing functions may be allocated to different functional modules for accomplishment according to a requirement, that is, an internal structure of the network device 1800 is divided into different functional modules, to accomplish all or some of the functions described above. In addition, the network device 1800 provided in the foregoing embodiment and the foregoing packet processing method belong to a same concept. For a specific implementation process thereof, refer to the method 400. Details are not described herein again.

FIG. 19 is a schematic diagram of a structure of a network device 1900 according to an embodiment of this application. The network device 1900 corresponds to the second network device in the foregoing method embodiments. As shown in FIG. 19, the network device 1900 includes: a receiving unit 1901, configured to receive a packet sent by a first network device; and a processing unit 1902, configured to perform step 404.

The modules in the network device 1900 and the foregoing other operations and/or functions are respectively used to implement various steps and methods implemented by the second network device in the method embodiments. For specific details, refer to the foregoing packet processing method. For brevity, details are not described herein again.

When the network device 1900 processes a packet, division of the foregoing functional modules is used only as an example for description. During actual application, the foregoing functions may be allocated to different functional modules for accomplishment according to a requirement, that is, an internal structure of the network device 1900 is divided into different functional modules, to accomplish all or some of the functions described above. In addition, the network device 1900 provided in the foregoing embodiment and the foregoing packet processing method belong to a same concept. For a specific implementation process, refer to the foregoing packet processing method. Details are not described herein again.

Corresponding to the method embodiment and the virtual apparatus embodiment provided in this application, an embodiment of this application further provides a network device. The following describes a hardware structure of the network device.

A network device 2000 or a network device 2100 described below corresponds to the first network device or the second network device in the foregoing method embodiments. Hardware and modules in the network device 2000 or the network device 2100, and the foregoing other operations and/or functions are respectively used to implement various steps and methods implemented by the network device 2000 or the network device 2100 in the method embodiments. For specific details of a detailed procedure of how the network device 2000 or the network device 2100 processes a packet, refer to the foregoing method embodiments. For brevity, details are not described herein again. The steps of the foregoing packet processing method are completed by using an integrated logic circuit of hardware or instructions in a form of software in a processor of the network device 2000 or the network device 2100. The steps in the methods disclosed with reference to embodiments of this application may be directly performed and completed by a hardware processor, or may be performed and completed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

The network device 2000 or the network device 2100 corresponds to the network device 1800 or the network device 1900 in the foregoing virtual apparatus embodiments, and each functional module of the network device 1800 or the network device 1900 is implemented by using software of the network device 2000 or the network device 2100. In other words, the functional modules included in the network device 1800 or the network device 1900 are generated after the processor of the network device 2000 or the network device 2100 reads program code stored in a memory.

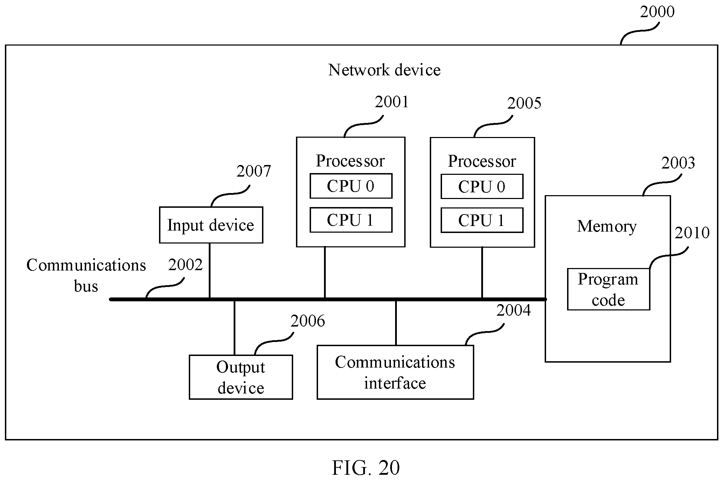

FIG. 20 is a schematic diagram of a structure of a network device 2000 according to an example embodiment of this application. The network device 2000 may be configured as a first network device or a second network device. The network device 2000 may be implemented by a general bus architecture.

The network device 2000 includes at least one processor 2001, a communications bus 2002, a memory 2003, and at least one communications interface 2004.

The processor 2001 may be a general-purpose CPU, an NP, or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communications bus 2002 is configured to transfer information between the foregoing components. The communications bus 2002 may be classified into an address bus, a data bus, a control bus, or the like. For ease of representation, only one bold line is used to represent the bus in the figure, but it does not mean that there is only one bus or only one type of bus.

The memory 2003 may be a read-only memory (read-only memory, ROM) or another type of static storage device that can store static information and/or instructions, or a random access memory (random access memory, RAM) or another type of dynamic storage device that can store information and/or instructions. Alternatively, the memory 2003 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, the memory 2003 is not limited thereto. The memory 2003 may exist independently, and is connected to the processor 2001 by using the communications bus 2002. The memory 2003 may alternatively be integrated with the processor 2001.

The communications interface 2004 is configured to communicate with another device or a communications network by using any transceiver-type apparatus. The communications interface 2004 includes a wired communications interface, and may further include a wireless communications interface. The wired communications interface may be, for example, an Ethernet interface. The Ethernet interface may be an optical interface, an electrical interface, or a combination thereof. The wireless communications interface may be a wireless local area network (wireless local area network, WLAN) interface, a cellular network communications interface, a combination thereof, or the like.

During specific implementation, in an embodiment, the processor 2001 may include one or more CPUs, such as a CPU 0 and a CPU 1 shown in FIG. 20.

During specific implementation, in an embodiment, the network device 2000 may include a plurality of processors, for example, a processor 2001 and a processor 2005 shown in FIG. 20. Each of the processors may be a single-core (single-CPU) processor or may be a multi-core (multi-CPU) processor. The processor herein may refer to one or more devices, circuits, and/or processing cores configured to process data (such as computer program instructions).

During specific implementation, in an embodiment, the network device 2000 may further include an output device 2006 and an input device 2007. The output device 2006 communicates with the processor 2001, and may display information in a plurality of manners. For example, the output device 2006 may be a liquid crystal display (liquid crystal display, LCD), a light emitting diode (light emitting diode, LED) display device, a cathode ray tube (cathode ray tube, CRT) display device, or a projector (projector). The input device 2007 communicates with the processor 2001 and may receive input from a user in a plurality of manners. For example, the input device 2007 may be a mouse, a keyboard, a touchscreen device, or a sensor device.

In some embodiments, the memory 2003 is configured to store program code 2010 for executing the solutions of this application, and the processor 2001 may execute the program code 2010 stored in the memory 2003. In other words, the network device 2000 may implement the packet processing method provided in the method embodiments by using the processor 2001 and the program code 2010 in the memory 2003.

The network device 2000 in this embodiment of this application may correspond to the first network device or the second network device in the foregoing method embodiments, and the processor 2001, the communications interface 2004, and the like in the network device 2000 may implement functions of the first network device or the second network device in the foregoing method embodiments and/or various steps and methods implemented in the foregoing method embodiments. For ease of brevity, details are not described herein again.

The sending unit 1802 in the network device 1800 is equivalent to the communications interface 2004 in the network device 2000. The processing unit 1801 in the network device 1800 may be equivalent to the processor 2001 in the network device 2000.

The receiving unit 1901 in the network device 1900 is equivalent to the communications interface 2004 in the network device 2000. The processing unit 1902 in the network device 1900 may be equivalent to the processor 2001 in the network device 2000.

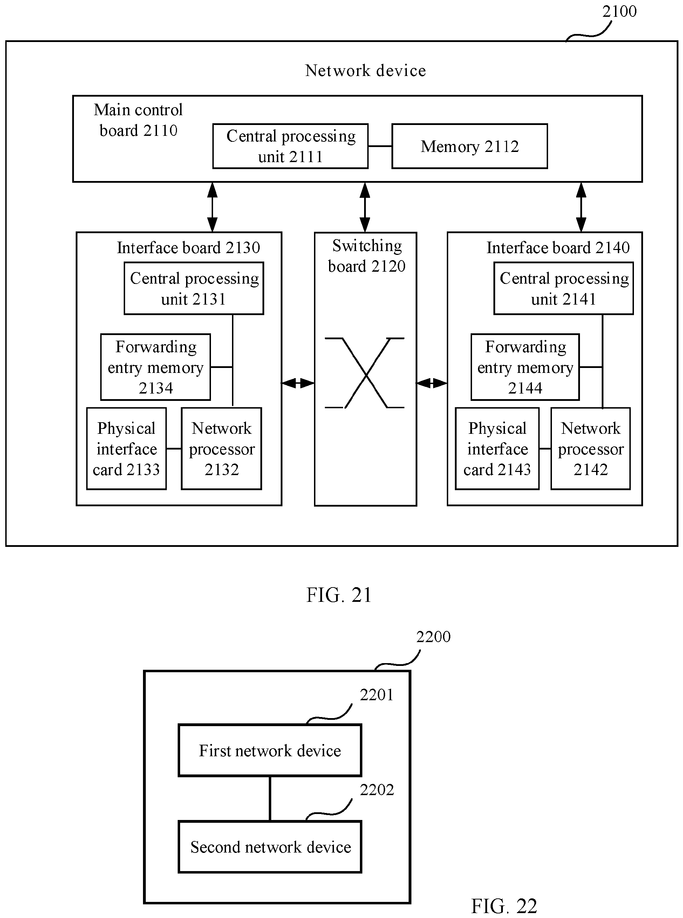

FIG. 21 is a schematic diagram of a structure of a network device 2100 according to an example embodiment of this application. The network device 2100 may be configured as a first network device or a second network device. The network device 2100 includes a main control board 2110 and an interface board 2130.

The main control board 2110 is also referred to as a main processing unit (main processing unit, MPU) or a route processor card (route processor card). The main control board 2110 is configured to control and manage components in the network device 2100, including route computation, device management, device maintenance, and a protocol-based processing function. The main control board 2110 includes a central processing unit 2111 and a memory 2112.

The interface board 2130 is also referred to as a line processing unit (line processing unit, LPU), a line card (line card), or a service board. The interface board 2130 is configured to provide various service interfaces, and forward a data packet. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to control and manage the interface board 2130 and communicate with the central processing unit 2111 on the main control board 2110.

The network processor 2132 is configured to implement forwarding processing of a packet. A form of the network processor 2132 may be a forwarding chip. Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2111) for processing. If the destination address of the packet is not the address of the network device 2100, the network processor 2132 searches for, based on the destination address, a next hop and an outbound interface corresponding to the destination address in the forwarding table, and forwards the packet to the outbound interface corresponding to the destination address. An uplink packet is processed as follows: Processing is performed over an inbound interface of the packet, and the forwarding table is searched. A downlink packet is processed as follows: The forwarding table is searched, and so on.

The physical interface card 2133 is configured to implement a physical layer interconnection function. Original traffic enters the interface board 2130 from the physical interface card 2133, and a processed packet is sent out from the physical interface card 2133. The physical interface card 2133, also referred to as a subcard, may be installed on the interface board 2130, and is responsible for converting a photoelectric signal into a packet, performing a validity check on the packet, and forwarding the packet to the network processor 2132 for processing. In some embodiments, the central processing unit may also perform a function of the network processor 2132, for example, implement software forwarding based on a general-purpose CPU, so that the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143.

Optionally, the network device 2100 further includes a switching board 2120. The switching board 2120 may also be referred to as a switch fabric unit (switch fabric unit, SFU). When the network device has a plurality of interface boards 2130, the switching board 2120 is configured to implement data exchange between the interface boards. For example, the interface board 2130 and the interface board 2140 may communicate with each other by using the switching board 2120.

The main control board 2110 is coupled to the interface board 2130. For example, the main control board 2110, the interface board 2130, the interface board 2140, and the switching board 2120 are connected to a system backplane by using a system bus. In a possible implementation, an inter-process communication (inter-process communication, IPC) channel is established between the main control board 2110 and the interface board 2130, and communication is performed between the main control board 2110 and the interface board 2130 through the IPC channel.

Logically, the network device 2100 includes a control plane and a forwarding plane. The control plane includes the main control board 2110 and the central processing unit 2131. The forwarding plane includes components that perform forwarding, such as the forwarding entry memory 2134, the physical interface card 2133, and the network processor 2132. The control plane performs functions such as a function of a router, generating a forwarding table, processing signaling and protocol packets, and configuring and maintaining a status of the device. The control plane delivers the generated forwarding table to the forwarding plane. On the forwarding plane, the network processor 2132 searches the forwarding table delivered by the control plane to forward a packet received by the physical interface card 2133. The forwarding table delivered by the control plane may be stored in the forwarding entry memory 2134. In some embodiments, the control plane and the forwarding plane may be totally separated, and are not on a same device.

If the network device 2100 is configured as the first network device, the physical interface card 2133 receives a second packet, and sends the second packet to the network processor 2132. The network processor 2132 generates a first packet based on the second packet, and sends the packet out by using the physical interface card 2133, so that the first packet is transmitted to a second network device.

If the network device 2100 is configured as the second network device, the physical interface card 2133 receives the first packet, and sends the first packet to the network processor 2132. The network processor 2132 obtains application information from a packet header of the first packet, and provides a network service for the first packet based on the application information.

The sending unit 1802 in the network device 1800 is equivalent to the physical interface card 2133 in the network device 2100. The processing unit 1801 in the network device 1800 may be equivalent to the network processor 2132 or the central processing unit 2111.

The receiving unit 1901 in the network device 1900 is equivalent to the physical interface card 2133 in the network device 2100. The processing unit 1902 in the network device 1900 may be equivalent to the network processor 2132 or the central processing unit 2111.

In this embodiment of this application, an operation on the interface board 2140 is consistent with an operation on the interface board 2130. For brevity, details are not described again. The network device 2100 in this embodiment may correspond to the first network device or the second network device in the foregoing method embodiments. The main control board 2110 and the interface board 2130 and/or the interface board 2140 in the network device 2100 may implement functions of the first network device or the second network device and/or various steps implemented in the foregoing method embodiments. For brevity, details are not described herein again.

It should be noted that, there may be one or more main control boards. When there are a plurality of main control boards, the main control boards may include an active main board and a standby main board. There may be one or more interface boards. The network device having a stronger data processing capability provides more interface boards. There may also be one or more physical interface cards on the interface board. There may be no switching board, or there may be one or more switching boards. When there are a plurality of switching boards, load sharing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of a device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained after the two central processing units are combined. This form of device (for example, a network device such as a low-end switch or a router) has a weak data exchange and processing capability. A specific architecture that is to be used depends on a specific networking deployment scenario. This is not limited herein.

In some possible embodiments, the first network device or the second network device may be implemented as a virtualized device.

For example, the virtualized device may be a virtual machine (English: Virtual Machine, VM) on which a program having a packet sending function is run, and the virtual machine is deployed on a hardware device (for example, a physical server). The virtual machine is a complete computer system that is simulated by software, that has a complete hardware system function, and that runs in a totally isolated environment. The virtual machine may be configured as the first network device or the second network device. For example, the first network device or the second network device may be implemented based on a general-purpose physical server in combination with a network functions virtualization (Network Functions Virtualization, NFV) technology. The first network device or the second network device is a virtual host, a virtual router, or a virtual switch. After reading this application, with reference to the NFV technology, a person skilled in the art may virtualize, on the general-purpose physical server, the first network device or the second network device having the foregoing functions. Details are not described herein again.

For example, the virtualized device may be a container, and the container is an entity used to provide an isolated virtualized environment. For example, the container may be a docker container. The container may be configured as the first network device or the second network device. For example, the first network device or the second network device may be created by using a corresponding image, for example, two container instances, respectively a container instance proxy-container 1 and a container instance proxy-container 2, may be created for a proxy-container by using an image of the proxy-container (a container that provides a proxy service). The container instance proxy-container 1 is provided as the first network device or a first computing device, and the container instance proxy-container 2 is provided as the second network device or a second computing device. When a container technology is used for implementation, the first network device or the second network device may run by using a kernel of a physical machine, and a plurality of first network devices or second network devices may share an operating system of the physical machine. Different first network devices or different second network devices may be isolated by using the container technology. A containerized first network device or second network device may run in a virtualized environment, for example, may run in a virtual machine. Alternatively, the containerized first network device or second network device may directly run in the physical machine.

For example, the virtualized device may be a pod. The pod is a basic unit of Kubernetes (Kubernetes is an open-source container orchestration engine of Google, and is briefly referred to as K8s in English) for deploying, managing, and orchestrating a containerized application. The pod may include one or more containers. All containers in a same pod are usually deployed on a same host. Therefore, all the containers in the same pod may communicate with each other through the host, and may share storage resources and network resources of the host. The pod may be configured as the first network device or the second network device. For example, specifically, a container as a service may be instructed (English full name: container as a service, English abbreviation: CaaS, which is a container-based PaaS service) to create a Pod, and the pod is provided as the first network device or the second network device.

Certainly, the first network device or the second network device may alternatively be another virtualized device, which is not enumerated herein one by one.

In some possible embodiments, the first network device or the second network device may alternatively be implemented by a general-purpose processor. For example, the general-purpose processor may be in a form of a chip. Specifically, the general-purpose processor implementing the first network device or the second network device includes a processing circuit, and an input interface and an output interface that are internally connected to and communicated with the processing circuit. The processing circuit is configured to perform the packet generation step in the foregoing method embodiments by using the input interface. The processing circuit is configured to perform the receiving step in the foregoing method embodiments by using the input interface. The processing circuit is configured to perform the sending step in the foregoing method embodiments by using the output interface. Optionally, the general-purpose processor may further include a storage medium. The processing circuit is configured to perform the storage step in the foregoing method embodiments by using the storage medium. The storage medium may store instructions executed by the processing circuit. The processing circuit is configured to execute the instructions stored in the storage medium, to perform the foregoing method embodiments.

Referring to FIG. 22, an embodiment of this application provides a network system 2200. The system 2200 includes a first network device 2201 and a second network device 2202. Optionally, the first network device 2201 is, for example, the network device 1800, the network device 1900, or the network device 2100, and the second network device 2202 is the network device 1900, the network device 2000, or the network device 2100.

An embodiment of this application provides a computer program product. When the computer program product runs on a first network device or a second network device, the first network device or the second network device is enabled to perform the packet processing method in the foregoing method embodiments.

The network devices in the foregoing product forms respectively have any functions of the first network device or the second network device in the foregoing method embodiments. Details are not described herein again.

A person of ordinary skill in the art may be aware that, the method steps and units described in embodiments disclosed in this specification may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It can be clearly understood by a person skilled in the art that, for the purpose of convenient and brief descriptions, for a detailed working process of the foregoing described system, apparatus, and unit, refer to a corresponding process in the foregoing method embodiment. Details are not described herein again.

In the several embodiments provided in this application, the disclosed system, apparatus, and method may be implemented in other manners. For example, the described apparatus embodiments are merely examples. For example, the division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or other forms.

The units described as separate components may or may not be physically separated, and components displayed as units may or may not be physical units. To be specific, the components may be located at one location, or may be distributed on a plurality of network units. Some or all of the units may be selected based on an actual requirement to achieve the objectives of the solutions in embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions in this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by software, hardware, firmware, or any combination thereof. When software is used to implement embodiments, embodiments may be implemented completely or partially in a form of a computer program product. The computer program product includes one or more computer program instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the spirit and principle of this application should fall within the protection scope of this application.

It can be clearly understood by a person skilled in the art that, for the purpose of convenient and brief descriptions, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or other forms.

The units described as separate components may or may not be physically separate, and components displayed as units may or may not be physical units. To be specific, the components may be located at one location, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions in this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A packet processing method, applied to a mobile communications network system, and comprising:
generating, by a first network device, a first packet, wherein a packet header of the first packet carries application information; and
sending, by the first network device, the first packet to a second network device, wherein the first packet is used to indicate the second network device to provide a network service based on the application information.

2. The method according to claim 1, wherein the first packet comprises a general packet radio system tunneling protocol user plane GTP-U packet.

3. The method according to claim 1 or 2, wherein before the generating, by a first network device, a first packet, the method further comprises:
receiving, by the first network device, a second packet, wherein an inner layer part of the second packet comprises the application information; and
the generating, by a first network device, a first packet comprises:
obtaining, by the first network device, the application information from the inner layer part of the second packet, and updating, by the first network device, the application information to the packet header.

4. The method according to any one of claims 1 to 3, wherein the packet header comprises a GTP-U extension packet header, an internet protocol version 4 IPv4 packet header, or an internet protocol version 6 IPv6 extension packet header.

5. The method according to claim 4, wherein the GTP-U extension packet header comprises an extension header length field, a next extension header type field, and an application information field; or
the GTP-U extension packet header comprises an extension header length field, a next extension header type field, a reserved field, and an application information field; and
the application information field comprises the application information.

6. The method according to claim 4, wherein the IPv4 packet header comprises an option type field, an option length field, and an application information field, and the application information field comprises the application information.

7. The method according to any one of claims 1 to 6, wherein the first network device comprises a base station or a user plane function UPF.

8. The method according to any one of claims 1 to 7, wherein the second network device comprises a bearer network device.

9. The method according to any one of claims 1 to 8, wherein the application information comprises one or more of the following:
a service-level agreement level SLA level, an application identifier, a user identifier, a flow identifier, and a network performance parameter.

10. A packet processing method, comprising:
receiving, by a second network device, a first packet sent by a first network device, wherein a packet header of the first packet carries application information; and
providing, by the second network device, a network service for the first packet based on the application information.

11. The method according to claim 10, wherein the providing, by the second network device, a network service for the first packet based on the application information comprises one or more of the following:
determining, by the second network device based on the application information, a network slice used to transmit the first packet, wherein the network slice has a performance requirement corresponding to the application information;
selecting, by the second network device, a quality of service QoS priority or a bandwidth guarantee policy for the first packet based on the application information;
selecting, by the second network device, a traffic engineering TE transmission path for the first packet based on the application information;
enabling, by the second network device, in-situ flow information telemetry iFIT transmission quality monitoring based on the application information; or
performing, by the second network device, traffic load balancing based on the application information, to determine a transmission path of the first packet.

12. The method according to claim 11, wherein the determining, by the second network device based on the application information, a network slice used to transmit the first packet comprises:
mapping, by the second network device, the application information to single network slice selection assistance information S-NSSAI, wherein the S-NSSAI identifies the network slice.

13. The method according to claim 11, wherein the performing, by the second network device, traffic load balancing based on the application information comprises:
performing, by the second network device, traffic load balancing by using the application information as a hash calculation parameter, to determine the transmission path of the first packet.

14. A first network device, wherein the first network device is used in a mobile communications network system, and the first network device comprises:
a processing unit, configured to generate a first packet, wherein a packet header of the first packet carries application information; and
a sending unit, configured to send the first packet to a second network device, wherein the first packet is used to indicate the second network device to provide a network service based on the application information.

15. The first network device according to claim 14, further comprising a receiving unit, configured to receive a second packet, wherein an inner layer part of the second packet comprises the application information; and
the processing unit is further configured to: obtain the application information from the inner layer part of the second packet, and update, by the first network device, the application information to the packet header.

16. The first network device according to claim 14 or 15, wherein the first packet comprises a general packet radio system tunneling protocol user plane GTP-U packet.

17. A second network device, comprising:
a receiving unit, configured to receive a first packet sent by a first network device, wherein a packet header of the first packet carries application information; and
a processing unit, configured to provide a network service for the first packet based on the application information.

18. The second network device according to claim 17, wherein the processing unit is specifically configured to perform one or more of the following:
determining, based on the application information, a network slice used to transmit the first packet, wherein the network slice has a performance requirement corresponding to the application information;
selecting a quality of service QoS priority or a bandwidth guarantee policy for the first packet based on the application information;
selecting a traffic engineering TE transmission path for the first packet based on the application information;
enabling in-situ flow information telemetry iFIT transmission quality monitoring based on the application information; or
performing traffic load balancing based on the application information, to determine a path for sending the first packet.

19. The second network device according to claim 18, wherein the processing unit is specifically configured to:
map the application information to single network slice selection assistance information S-NSSAI, wherein the S-NSSAI identifies the network slice.

20. The second network device according to claim 18, wherein the processing unit is specifically configured to:
perform traffic load balancing by using the application information as a hash calculation parameter, to determine the path for sending the first packet.
